# FASCICULE DE BREVET EUROPEEN

(11) **EP 2 954 224 B1**
(45) Date de publication et mention de la délivrance du brevet: **01.05.2019**
(21) Numéro de dépôt: 13711557.2
(22) Date de dépôt: 11.02.2013
(51) Int. Cl.: F16F 15/14, F16F 15/134

(54) **DISPOSITIF DE TRANSMISSION DE COUPLE POUR UN VÉHICULE AUTOMOBILE**
DREHMOMENTÜBERTRAGENDE VORRICHTUNG FÜR EIN KRAFTFAHRZEUG
TORQUE TRANSMITTING DEVICE FOR A MOTOR VEHICLE

(43) Date de publication de la demande: 16.12.2015
(73) Titulaire: Valeo Embrayages, 80009 Amiens Cedex 2 (FR)
(72) Inventeur: ROST, Jonathan, F-80000 Amiens (FR); BOUCHENY, Pierre, F-80090 Amiens (FR)
(74) Mandataire: Cardon, Nicolas
(86) Numéro de dépôt international: PCT/FR2013/050279
(87) Numéro de publication internationale: WO 2014/122367

(56) Documents cités:
- EP-A2- 1 741 954
- EP-A2- 1 744 074
- DE-A1-102004 011 830
- DE-A1-102009 052 202
- FR-A1- 2 976 331
- US-A1- 2010 269 497

## Description

La présente invention concerne un dispositif de transmission de couple pour un véhicule automobile.

Le document FR 2 976 331 décrit un dispositif d'amortissement de torsion, notamment pour une transmission de véhicule automobile, représentant l'art antérieur pertinent.

Le document FR 2 826 079 décrit un dispositif de transmission de couple pour un véhicule automobile, comportant un élément d'entrée de couple comprenant un volant d'inertie destiné à être couplé à un arbre moteur, tel par exemple qu'un vilebrequin d'un moteur à combustion interne, et un élément de sortie de couple, destiné à être couplé à un arbre d'entrée d'une boîte de vitesses par l'intermédiaire d'un embrayage.

L'élément d'entrée comprend en général deux éléments, un volant moteur et un couvercle, soudés l'un à l'autre à leur périphérie radialement externe de manière à délimiter un volume interne étanche dans lequel sont montés des organes élastiques courbes tels que des ressorts à spires hélicoïdales.

Les organes élastiques s'étendent circonférentiellement et prennent appui, à une première extrémité, sur le volant moteur et/ou le couvercle et, à une seconde extrémité, sur un voile annulaire appartenant à l'élément de sortie.

En fonctionnement, les organes élastiques sont plaqués contre des goulottes disposées en périphérie externe du volume interne précité, sous l'effet de la force centrifuge.

Le volume interne comporte de la graisse permettant de garantir le bon fonctionnement des organes élastiques.

Le dispositif de transmission de couple comporte en outre des moyens d'amortissement pendulaires, logés dans le volume interne rempli de graisse, comportant des masses pendulaires montées de façon mobile sur le voile annulaire. Ces masses sont disposées radialement à intérieur ou à l'extérieur des organes élastiques courbes.

Un tel dispositif de transmission présente les inconvénients suivants.

Tout d'abord, les organes élastiques courbes soumis à des efforts centrifuges en fonctionnement frottent contre les goulottes, ce qui peut perturber leur déformation et ainsi nuire à l'amortissement des vibrations et des acyclismes du moteur.

En effet, en fonctionnement, la rigidité des organes élastiques courbes augmente, ce qui diminue l'efficacité de la filtration des vibrations.

L'utilisation d'organes élastiques courbes nécessite en outre l'utilisation d'un volume interne étanche rempli de graisse. Or, il est relativement difficile d'assurer une étanchéité totale du volume interne, de sorte que de la graisse peut polluer les autres parties du dispositif de transmission de couple.

En outre, la graisse peut également réduire les performances des moyens d'amortissement pendulaires logés dans le volume interne précité.

Enfin, placer les masses des moyens pendulaires radialement à l'extérieur des organes élastiques courbes implique une structure relativement complexe, qui n'est par ailleurs pas détaillée dans le document FR 2 826 079.

Or, afin d'améliorer l'efficacité de ces moyens pendulaires, il est nécessaire que ceux-ci soient placés le plus loin possible de l'axe de rotation.

L'invention a notamment pour but d'apporter une solution simple, efficace et économique à ce problème.

A cet effet, elle propose un dispositif de transmission de couple pour un véhicule automobile, comportant un élément d'entrée de couple comprenant un volant d'inertie destiné à être couplé à un arbre moteur, et un élément de sortie de couple, destiné à être couplé à un arbre d'entrée d'une boîte de vitesses, des organes élastiques agissant à l'encontre de la rotation de l'un des éléments d'entrée et de sortie par rapport à l'autre, et des moyens d'amortissement pendulaires comportant des masses pendulaires montées de façon mobile sur une partie mobile du dispositif, radialement à l'extérieur des organes élastiques. Le dispositif est remarquable en ce qu'il comporte au moins un groupe d'organes élastiques monté entre les éléments d'entrée et de sortie de couple, les organes élastiques d'un même groupe étant agencés en série par l'intermédiaire d'un organe de phasage, de façon à ce que les organes élastiques de chaque groupe se déforment en phase les uns avec les autres, les masses pendulaires étant montées de façon mobile sur l'élément de sortie de couple ou sur l'organe de phasage.

L'invention propose ainsi un dispositif de transmission de couple ayant une structure de type LTD (Long Travel Damper), comportant un volant moteur relié directement à l'arbre moteur, et pouvant utiliser des organes élastiques droits agencés en série par l'intermédiaire d'un organe de phasage. Le dispositif de transmission de couple ne comporte ainsi pas de volume interne étanche rempli de graisse dans lequel sont disposés les organes élastiques.

On évite ainsi les inconvénients des ressorts courbes exposés précédemment. En effet, l'utilisation d'un organe de phasage permet d'utiliser des ressorts plus courts, par exemple des ressorts droits, qui ont moins tendance à être déformés radialement vers l'extérieur en fonctionnement. On évite également les inconvénients liés à la présence de graisse, exposés précédemment, tout en ayant une structure relativement simple.

En outre, le dispositif de transmission de couple comporte des moyens d'amortissement pendulaires situés à l'extérieur des organes élastiques, ce qui permet d'améliorer leur efficacité.

Selon l'invention, les organes élastiques de chaque groupe prennent appui, d'une part, sur un voile annulaire et, d'autre part, sur deux rondelles de guidage s'étendant radialement, de part et d'autre du voile annulaire et mobiles en rotation par rapport à ce dernier.

Selon une forme de réalisation de l'invention, les rondelles de guidage appartiennent à l'élément de sortie de couple le voile annulaire appartenant à l'élément d'entrée de couple, les masses pendulaires étant montées en périphérie externe de l'une au moins des rondelles de guidage.

Dans ce cas, les masses pendulaires peuvent être disposées axialement de part et d'autre de la rondelle de guidage sur laquelle elles sont montées, et sont reliées entre elles.

Les masses sont donc réparties symétriquement de part et d'autre de la rondelle de guidage, ce qui améliore l'équilibrage de l'ensemble.

En variante, les masses pendulaires sont disposées axialement entre les deux rondelles de guidage et montées de façon mobile sur chacune des rondelles de guidage.

Selon une autre forme de réalisation de l'invention, les rondelles de guidage appartiennent à l'élément d'entrée de couple, ou respectivement à l'élément de sortie de couple, le voile annulaire appartenant à l'élément de sortie de couple, ou respectivement à l'élément d'entrée de couple, les masses pendulaires étant montées en périphérie externe de l'organe de phasage.

Dans ce cas, les masses peuvent être disposées axialement de part et d'autre de l'organe de phasage sur lequel elles sont montées, et peuvent être reliées entre elles.

Les masses sont donc réparties symétriquement de part et d'autre de l'organe de phasage, ce qui améliore l'équilibrage de l'ensemble.

L'organe de phasage peut comporter deux tôles radiales fixées l'une à l'autre et s'étendant radialement, de part et d'autre du voile annulaire, lesdites tôles pouvant être équipées de moyens d'appui des organes élastiques.

En outre, le volant d'inertie de l'élément d'entrée de couple peut comporter une masse d'inertie en périphérie radialement externe et un moyeu en périphérie radialement interne, relié à la masse d'inertie par l'intermédiaire d'au moins une tôle annulaire flexible.

Selon l'invention, le volant d'inertie comporte un rebord cylindrique radialement externe, recouvrant au moins partiellement l'élément de sortie de couple, les organes élastiques et les masses pendulaires, ce qui permet de protéger tous ces éléments.

L'invention sera mieux comprise et d'autres détails, caractéristiques et avantages de l'invention apparaîtront à la lecture de la description suivante faite à titre d'exemple non limitatif en référence aux dessins annexés dans lesquels :
- la figure 1 est une vue éclatée, en perspective, d'un dispositif de transmission de couple selon une première forme de réalisation de l'invention,
- la figure 2 est une vue de face du dispositif de la figure 1,
- les figures 3, 4, 5 et 6 sont des vues en coupe dudit dispositif, respectivement selon les lignes A, B, C et D de la figure 2,
- la figure 7 est une vue éclatée, en perspective, d'un dispositif de transmission de couple selon une deuxième forme de réalisation de l'invention,
- la figure 8 est une vue de face du dispositif de la figure 7,
- les figures 9 et 10 sont des vues en coupe dudit dispositif, respectivement selon les lignes A et B de la figure 8,
- la figure 11 est une vue correspondant à la figure 10, dans laquelle les rouleaux de guidage des masses ont été retirés,
- la figure 12 est une vue d'un rouleau de guidage d'une masse,
- les figures 13 et 14 sont des vues en coupe dudit dispositif, respectivement selon les lignes C et D de la figure 8,
- la figure 15 est une vue éclatée, en perspective, d'un dispositif de transmission de couple selon une troisième forme de réalisation de l'invention,
- la figure 16 est une vue de face du dispositif de la figure 15,
- les figures 17, 18, 19, 20 sont des vues en coupe dudit dispositif, respectivement selon les lignes A, B, C et D de la figure 16.

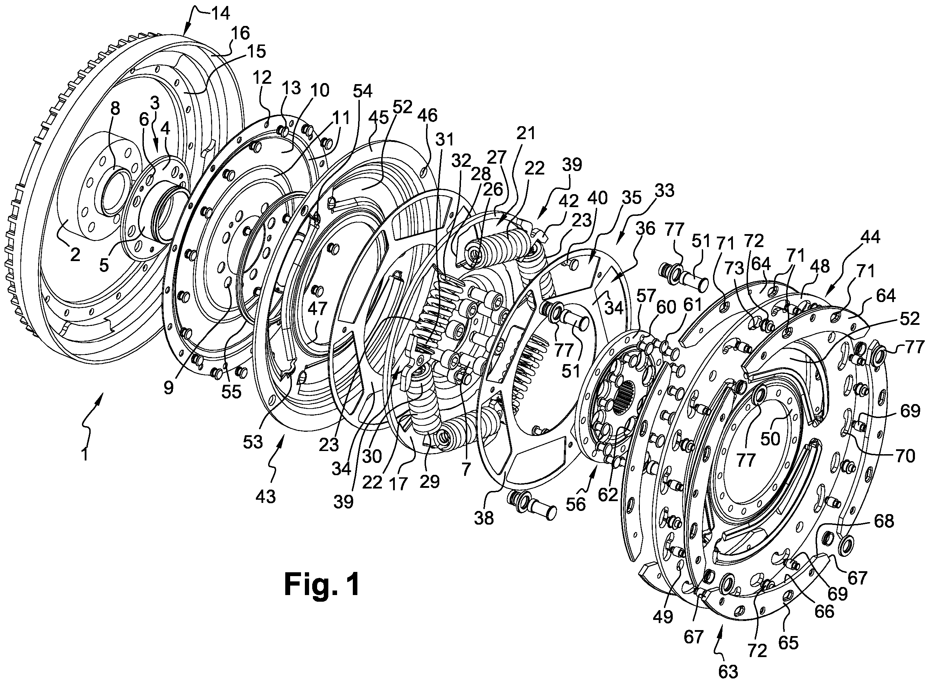

Un dispositif de transmission de couple pour un véhicule automobile, selon une première forme de réalisation de l'invention, est représenté aux figures 1 à 6. Il comporte un élément d'entrée de couple comprenant un volant moteur 1 destiné à être couplé directement à un arbre moteur, tel par exemple qu'un vilebrequin 2 d'un moteur thermique.

Le volant moteur 1 comporte un moyeu central 3, qu'on appellera dans la suite de la description moyeu primaire 3, comprenant une partie annulaire radiale 4 dont la périphérie radialement interne est prolongée vers l'avant par une partie annulaire cylindrique 5. Des trous 6 sont ménagés dans la partie annulaire radiale et sont régulièrement répartis sur toute la circonférence. Des vis de fixation 7, engagées dans les trous 6, permettent la fixation du moyeu primaire 3 à l'extrémité du vilebrequin 2 du moteur.

L'extrémité du vilebrequin 2 comporte une zone cylindrique de guidage 8, engagée à l'intérieur du moyeu primaire 3, de manière à assurer le centrage du moyeu primaire 3 sur l'extrémité du vilebrequin 2.

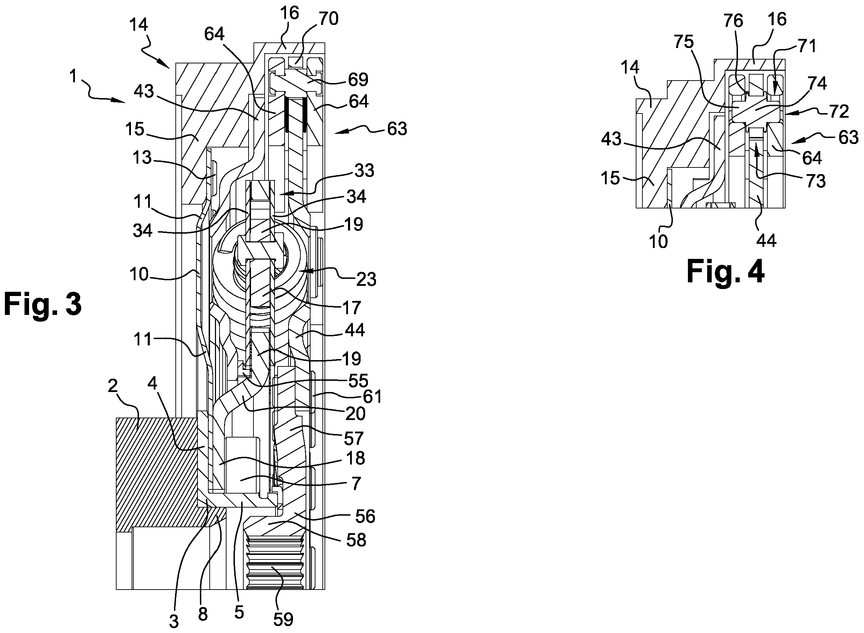

Les vis précitées 7 viennent également s'engager dans des trous 9 ménagés à la périphérie radialement interne d'une tôle annulaire flexible 10, déformable élastiquement et axialement. La tôle annulaire comporte des zones annulaires cambrées 11 (figures 1 et 3), comme cela est connu en soi. La tôle annulaire 10 permet de filtrer une partie des vibrations générées par le moteur et transmis par le vilebrequin 2.

Des trous 12 sont en outre ménagés à la périphérie radialement externe de la tôle flexible et sont destinés à la fixation par l'intermédiaire de rivets 13 à une masse d'inertie annulaire 14.

Plus particulièrement, la masse d'inertie comporte une partie 15 s'étendant radialement, dont le bord périphérique externe est prolongé vers l'avant par un rebord cylindrique 16.

L'ensemble formé par la masse d'inertie 14, la tôle flexible 10 et le moyeu primaire 3 est appelé volant moteur ou volant primaire. Cet ensemble peut, en variante, être formé d'une seule pièce.

Les vis précitées 7 viennent également s'engager dans des trous ménagés à la périphérie radialement interne d'un voile annulaire 17. Les têtes des vis 7 viennent en appui contre la face avant du voile annulaire 17.

Le voile annulaire 17 comporte une partie radialement interne 18, dans laquelle sont ménagés les trous précités, et une partie radialement externe 19, reliées par une partie tronconique 20 s'évasant vers l'avant (figure 3). La partie radialement externe 19 est ainsi décalée axialement vers l'avant par rapport à la partie radialement interne 18.

Le voile annulaire 17 comporte au moins deux fenêtres 21 servant au logement d'au moins deux groupes d'organes élastiques 22,23. Dans la forme de réalisation représentée aux figures 1 à 6, le voile annulaire 17 comporte trois fenêtres 21 (figure 1) s'étendant circonférentiellement dans la partie radialement externe, et servant au logement de trois groupes d'organes élastiques 22, 23, chaque groupe étant constitué de deux organes élastiques 22, 23 agencés en série, comme cela sera mieux décrit dans ce qui suit.

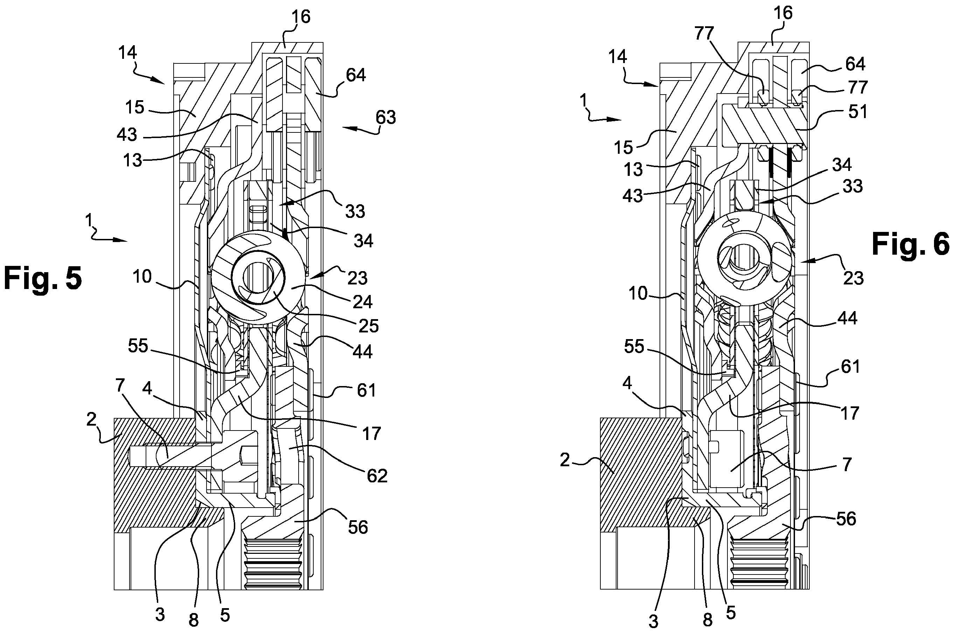

Chaque organe élastique 22, 23 peut comporter deux ressorts coaxiaux 24, 25 (figure 5), montés l'un dans l'autre. Ces ressorts 24, 25 sont des ressorts hélicoïdaux de compression, qui sont droits, c'est-à-dire qui s'étendent de façon sensiblement rectiligne.

Les fenêtres comportent un bord courbe interne 26, un bord courbe externe 27 et des bords d'extrémité 28 globalement radiaux, destinés à l'appui des organes élastiques 22, 23 (figure 1). Ces bords d'extrémités 28 peuvent former un angle avec la direction radiale.

Les extrémités circonférentielles des fenêtres 21 présentent des dimensions radiales rétrécies, afin d'assurer le maintien radial en position des extrémités 29, 32 des organes élastiques 22, 23. Au contraire, les zones centrales des fenêtres 21 présentent une dimension radiale plus importante, afin que les organes élastiques droits 22, 23 ne viennent pas frotter contre le bord radialement externe 27 en fonctionnement.

Le volant moteur et le voile annulaire 7 forment l'élément d'entrée de couple.

Comme indiqué précédemment, les organes élastiques 22, 23 d'un même groupe sont montés en série, par l'intermédiaire d'un organe de phasage 33.

Dans la forme de réalisation représentée aux figures 1 à 6, l'organe de phasage 33 comporte deux tôles radiales 34 s'étendant de part et d'autre de la zone radialement externe 19 du voile annulaire 17.

Chaque tôle 34 comporte au moins deux paires de fenêtres 35, 36, chaque fenêtre 35, 36 étant destinée à loger un organe élastique 22, 23. Sur la figure 1, chaque tôle 34 comporte trois paires de fenêtres. Ainsi, chaque tôle 34 comporte un anneau radialement interne et un anneau radialement externe, reliés par six pattes radiales 37, 38. Trois de ces pattes, référencées 37, servent à la fixation de trois éléments d'appui 39, par l'intermédiaire de rivets 40. Chaque élément d'appui 39 comporte deux faces d'appui 41 sensiblement planes et opposées, formant un angle entre elles et servant à l'appui des extrémités 30, 31 des organes élastiques 22, 23.

Chaque élément d'appui 39 comporte en outre, à son bord radialement externe, deux pattes opposées 42 s'étendant de part et d'autre afin de former des butées limitant le déplacement vers l'extérieur des extrémités 30, 31 des organes élastiques 22, 23 venant s'appuyer sur l'élément d'appui 39.

Ainsi, les extrémités des organes élastiques 22, 23 sont maintenues radialement en position par les extrémités rétrécies des fenêtres 21 du voile annulaire 17 et par les pattes précitées 42 des éléments d'appui 39.

Lors du montage, les organes élastiques 22, 23 sont précontraints à l'intérieur des fenêtres 21 du voile annulaire 17. En d'autres termes, lors du montage, chaque organe élastique 22, 23 comporte une extrémité 29, 32 en appui contre un bord d'extrémité 28 de la fenêtre 21 et une extrémité 30, 31 en appui contre une face d'appui 41 d'un élément d'appui 39.

En fonctionnement, chaque groupe d'organe élastique 22, 23 est destiné à être comprimé entre le voile annulaire 17, d'une part, et des rondelles de guidage 43, 44 de l'élément de sortie de couple, d'autre part.

Ainsi, dans un premier sens de rotation, les extrémités 29 des organes élastiques 22 viennent en appui contre le voile annulaire 17 de l'élément d'entrée de couple et les extrémités 32 des organes élastiques 23 viennent en appui contre les rondelles de guidage 43, 44 de l'élément de sortie de couple. Dans un second sens de rotation, opposé au premier, les extrémités 29 des organes élastiques 22 viennent en appui contre les rondelles de guidage 43, 44 de l'élément de sortie de couple et les extrémités 32 des organes élastiques 23 viennent en appui contre les rondelles de guidage 43, 44 de l'élément de sortie de couple.

Une première rondelle de guidage 43, dite rondelle de guidage arrière 43, comporte une périphérie radialement externe 45 dans laquelle sont ménagés des trous 46 et une périphérie radialement interne 47 décalée axialement vers l'arrière par rapport à la périphérie radialement externe 45 (figure 1).

Une seconde rondelle de guidage 44, dite rondelle de guidage avant 44, comporte une périphérie radialement externe 48 dans laquelle sont ménagés des trous 49 et une périphérie radialement interne 50 décalée axialement vers l'avant par rapport à la périphérie radialement externe 49 (figure 1).

Les trous 46, 49 des rondelles de guidage 43, 44 servent au passage de rivets 51 (figures 1 et 6) permettant notamment de fixer les deux rondelles de guidage 43, 44 entre elles.

Les parties radialement médianes des rondelles de guidage 43, 44 comportent chacune au moins deux fenêtres 52, trois dans le mode de réalisation représenté, s'étendant circonférentiellement, destinées à loger chacune un groupe d'organes élastiques 22, 23. Les fenêtres 52 de la rondelle de guidage avant 44 sont disposées en regard des fenêtres 52 de la rondelle de guidage arrière 43.

Les extrémités circonférentielles des fenêtres 52 comportent des zones d'appui radiales 53 et 54 (figure 1), destinées respectivement à l'appui des extrémités 29 et 32 des organes élastiques 22, 23, en fonction du sens de rotation de l'élément de sortie de couple par rapport à l'élément d'entrée de couple.

Les organes élastiques 22, 23 sont ainsi agencés entre l'élément d'entrée de couple et l'élément de sortie de couple, de manière à amortir et absorber les vibrations et les acyclismes de rotation.

Une bague 55 de friction, de section en forme générale de L, est montée axialement entre la périphérie radialement interne 47 de la rondelle de guidage arrière 43 et le voile annulaire 17.

Un moyeu 56, appelé ci-après moyeu secondaire 56, est fixé en périphérie radialement interne 50 de la seconde rondelle de guidage 44. Le moyeu secondaire 56 comporte une partie radiale annulaire 57 dont le bord radialement interne est prolongé vers l'arrière par une partie annulaire cylindrique 58 présentant intérieurement des cannelures 59 (figure 3) destinées à coopérer avec des cannelures d'un arbre de sortie, lui-même destiné à être couplé à un élément d'entrée d'un embrayage ou d'un convertisseur de couple par exemple.

La partie radiale annulaire 57 comporte, en périphérie radialement externe, des trous 60 servant à sa fixation, par l'intermédiaire de rivets 61, sur la rondelle de guidage avant 44. La partie radiale annulaire 57 comporte en outre, dans une zone médiane, des trous 62 servant au passage des vis de serrage, d'un outil de serrage ou de desserrage des vis 7 de fixation de l'élément d'entrée de couple sur le vilebrequin 2.

Les rondelles de guidage 43, 44 et le moyeu secondaire 56 forment l'élément de sortie de couple.

Des moyens d'amortissement pendulaires 63 sont montés sur l'élément de sortie de couple, plus précisément sur la rondelle de guidage avant 44.

Les moyens d'amortissement pendulaires 63 comportent au moins deux paires de masses ou masselottes 64, quatre dans le mode de réalisation représenté, en forme générale d'arc de cercle, montées en périphérie radialement externe 48 de la rondelle de guidage avant 44 .

Les masses 64 d'une même paire sont montées de part et d'autre de la rondelle de guidage avant 44, en regard les unes des autres.

Chaque masse 64 comporte un bord périphérique externe 65 s'étendant en regard de la périphérie radialement externe de la rondelle de guidage avant 44, un bord périphérique interne 66 et des extrémités circonférentielles radiales 67 (figure 1). Les extrémités circonférentielles 67 sont reliées au bord périphérique interne 66 par des zones planes 68 formant un angle, par exemple de l'ordre de 45°, avec les extrémités circonférentielles radiales 67.

Les masses 64 d'une même paire sont fixées l'une à l'autre par trois rivets 69 assurant également une fonction d'entretoisement. L'écartement entre les masses 64, maintenues par les rivets 69, est supérieur à l'épaisseur de la rondelle de guidage avant 44, dans sa partie radialement externe 48, de manière à limiter les frottements entre les masses 64 et la rondelle de guidage avant 44.

Un rivet 69 est disposé à proximité de chacune des extrémités circonférentielles des masses 64, un autre rivet 69 étant situé en partie médiane desdites masses 64.

Chacun des rivets 69 traverse un trou oblong 70, en forme générale d'arc de cercle, de la rondelle de guidage avant 44 (figures 1, 2 et 3). Ces trous en arc de cercle 70 présentent une concavité tournée radialement vers l'intérieur. Les dimensions des trous 70 sont telles que, en fonctionnement, les rivets 69 ne viennent pas au contact des bords desdits trous oblongs 70, pour les raisons exposées ci-après.

Chaque masse 64 comporte en outre deux trous oblongs 71, en forme général d'arc de cercle, dont la concavité est tournée radialement vers l'extérieur, et disposés chacun circonférentiellement entre deux rivets 69. Les trous 71 d'une masse 64 sont disposés en regard des trous 71 de la masse opposée 64. Ces trous 71 servent au montage avec jeu de guides ou rouleaux 72, s'étendant axialement d'une masse à l'autre, au travers de trous oblongs 73 en forme d'arc de cercle et dont la concavité est tournée radialement vers l'intérieur, ménagés dans la rondelle de guidage avant 44.

Chaque rouleau 72 comporte une zone centrale cylindrique 74 (figure 4), des zones d'extrémités 75 cylindriques de plus faible diamètre que la zone centrale 74, et deux collerettes 76 s'étendant radialement vers l'extérieur, délimitant la zone centrale 74 de chacune des zones d'extrémités 75.

Le diamètre des collerettes 76 est inférieur à la dimension radiale des trous oblongs 73 de la rondelle de guidage avant 44, de façon à permettre le montage des rouleaux 72 dans les trous 73.

La zone centrale 74 est destinée à rouler sur le bord périphérique du trou 73 en arc de cercle correspondant de la rondelle de guidage avant 44, et les zones d'extrémités 75 sont destinées à rouler sur les bord des trous 71 en arc de cercle correspondants des masses 64. Les collerettes 76 sont destinées à s'intercaler entre les masses 64 et la rondelle de guidage avant 44, de manière à limiter les frottements lors du déplacement des masses 64 par rapport à la rondelle de guidage avant 44.

On notera que, en fonctionnement, les rouleaux 72 et les masses 64 sont poussés vers l'extérieur sous l'effet de la force centrifuge.

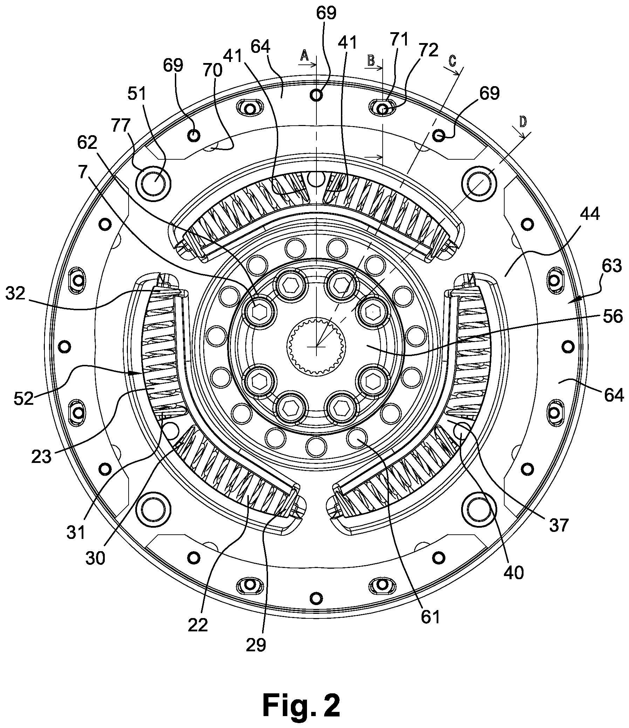

La rondelle de guidage avant 44 est en outre équipée, de part et d'autre, d'organes de butée disposés chacun circonférentiellement entre deux masses adjacentes. Les organes de butée comportent des bagues en élastomère 77, reliées deux à deux par les rivets 51 de fixation des rondelles de guidage 43, 44 (figures 2 et 6). En fonctionnement, le déplacement des masses 64 est limité par les organes de butée, par appui des zones 68 sur les anneaux en élastomère 77. Les dimensions et le positionnement des différents éléments sont tels que les masses 64 viennent en appui sur les organes de butée 77 avant que les rouleaux 72 ou les rivets 69 ne viennent en butée contre les extrémités circonférentielles des trous 71, 70, 73 en arc de cercle des masses 64 et de la rondelle de guidage avant 44. Ceci permet de limiter le bruit en fonctionnement.

Les masses 64 sont ainsi montées de façon mobile sur la rondelle de guidage avant 44, à la manière de pendules, la trajectoire des masses 64 étant définie par la forme des trous en arc de cercle 73, 71 ménagés dans la rondelle de guidage avant 44 et dans les masses 64.

Comme cela est connu en soi, les moyens d'amortissement pendulaires 63 permettent de limiter les vibrations transmises à l'arbre de sortie.

On notera que la masse d'inertie 14, et plus particulièrement son rebord 16, recouvrent le voile annulaire 17, les organes élastiques 22, 23, les rondelles de guidage 43, 44, le moyeu secondaire 56 et les moyens d'amortissement pendulaires 63.

Un tel dispositif de transmission de couple permet de combiner les avantages d'une structure de type LTD (Long Travel Damper) avec ceux des moyens d'amortissement pendulaires 63. C'est ainsi que ce dispositif, de structure relativement simple, offre un débattement angulaire important entre l'élément d'entrée et l'élément de sortie de couple, tout en ayant de bonnes performances en termes de filtration et d'amortissement des vibrations et des acyclismes de rotation. Un tel dispositif ne nécessite pas non plus la présence de graisse au sein d'un volume étanche, comme dans l'art antérieur.

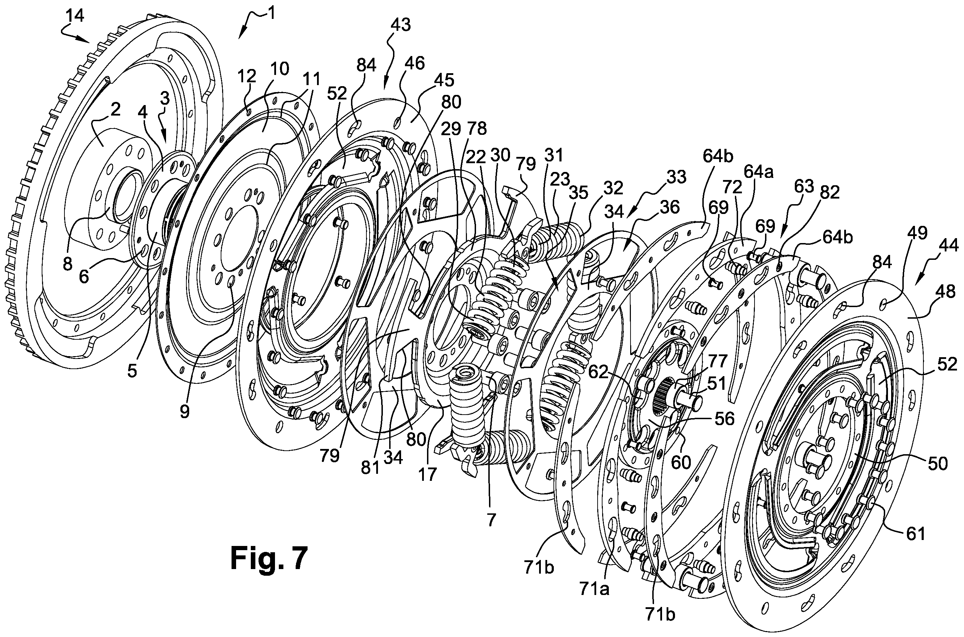

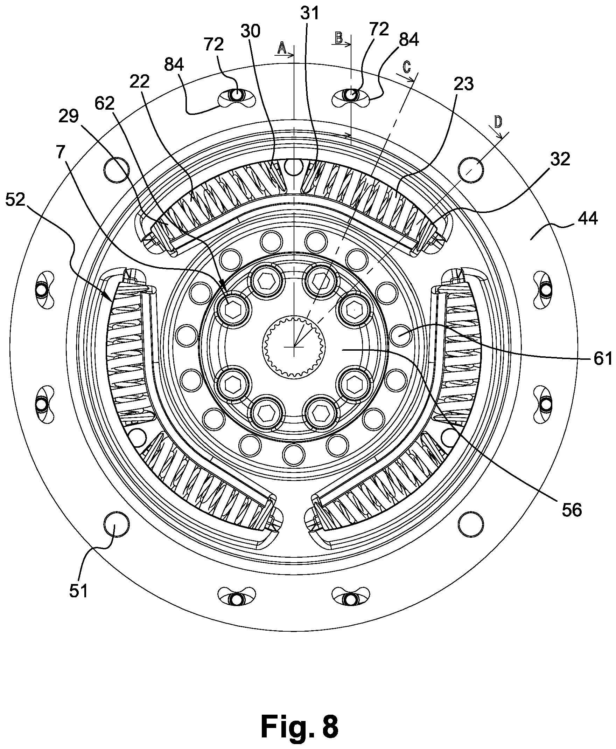

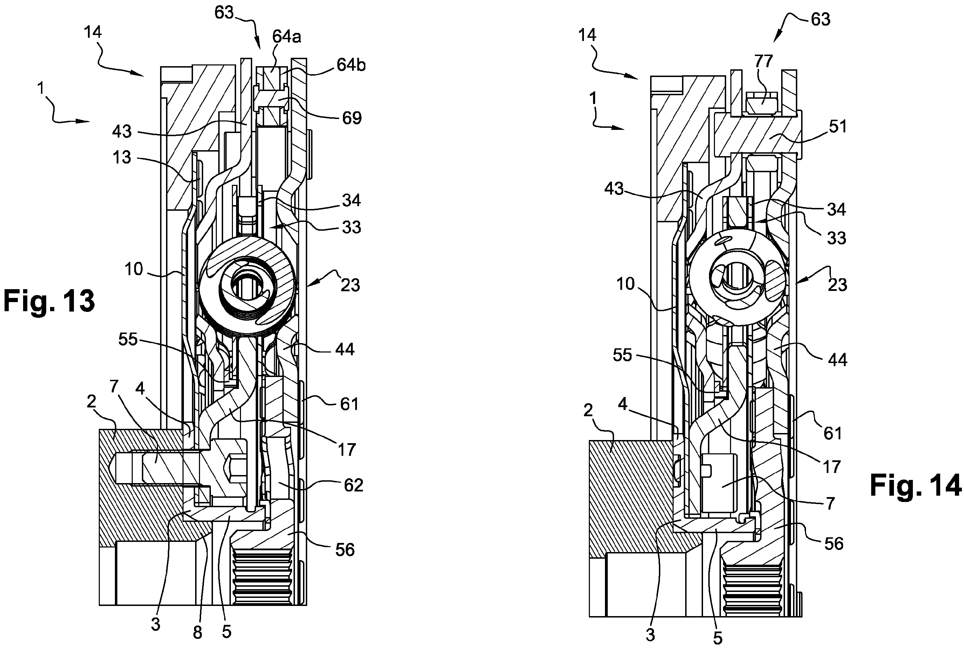

Les figures 7 à 14 représentent une seconde forme de réalisation, qui diffère de celle des figures 1 à 6, principalement en ce que les moyens d'amortissement pendulaires 63 sont montés entre les rondelles de guidage avant 44 et arrière 43.

Dans la description qui suit, nous détaillerons uniquement les différences avec la première forme de réalisation des figures 1 à 6, les éléments non décrits présentant une structure et/ou un fonctionnement similaires à ceux déjà décrits pour la première forme de réalisation.

Dans cette seconde forme de réalisation, la partie radialement externe 19 du voile annulaire 17 comporte une zone annulaire 78 à partir de laquelle trois pattes 79 s'étendent radialement vers l'extérieur (figure 7). Chaque patte 79 comporte deux surfaces latérales opposées 80, destinées à l'appui des extrémités 29, 32 des organes élastiques 22, 23.

Des butées 81 s'étendent circonférentiellement de part et d'autre des extrémités libres des pattes 79, de façon à retenir radialement les extrémités 29, 32 des organes élastiques 22, 23.

Un tel voile 17 peut être utilisé dans les autres formes de réalisation de l'invention, et inversement.

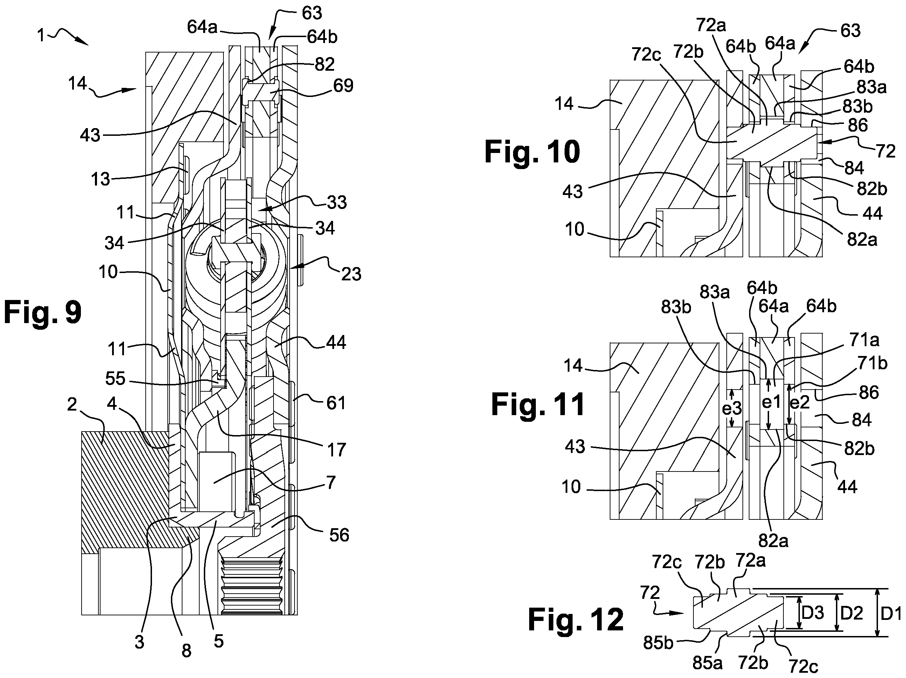

Les moyens d'amortissement pendulaires 63 comportent des masses 64, ici au nombre de quatre, montées axialement entre les rondelles de guidage avant 44 et arrière 43. Chaque masse 64 comporte trois parties de même forme générale en arc de cercle, respectivement une partie centrale 64a et deux parties latérales 64b, disposées de part et d'autre de la partie centrale 64a. Les différentes parties 64a, 64b sont fixées les unes aux par trois rivets 69, les têtes des rivets 69 s'appuyant sur des lamages 82 (figures 7 et 9) ménagés dans les parties latérales 64b.

Chacune des parties 64a, 64b présente en outre deux trous oblongs 71a, 71b en forme d'arc de cercle, dont la concavité est tournée vers l'extérieur, disposés chacun entre deux rivets 69.

Comme cela est mieux visible aux figures 10 et 11, les bords radialement internes 82a des trous oblongs 71a de la partie centrale 64a sont situés radialement à l'intérieur par rapport aux bords radialement internes 82b des trous oblongs 71b des parties latérales 64b. En outre, les bords radialement externes 83a des trous oblongs 71a de la partie centrale 64a sont situés radialement à l'extérieur par rapport aux bords radialement externes 83b des trous oblongs 71b des parties latérales 64b.

Chaque rondelle de guidage 43, 44 comporte une paires de trous oblongs 84 par masse 64, en forme d'arc de cercle avec une concavité tournée vers l'intérieur.

Les rouleaux 72 sont montés avec jeu dans les trous oblongs 71a, 71b, 84 en arc de cercle des masses 64 et des rondelles de guidage 43, 44.

Comme cela est mieux visible aux figures 10 et 12, chaque rouleau 72 comporte une zone centrale cylindrique 72a de diamètre D1, bordée de part et d'autre par deux zones intermédiaires cylindriques 72b, de diamètre D2, et deux zones d'extrémité cylindriques 72c, de diamètre D3. Le diamètre D1 est supérieur au diamètre D2, lui-même supérieur au diamètre D3.

On désigne par e1 la dimension radiale des trous oblongs 71a des parties centrales 64a des masses 64, c'est-à-dire la distance du bord périphérique interne 82a au bord périphérique externe 83a correspondant. On désigne par e2 la dimension radiale des trous oblongs 71b des parties latérales 64b des masses 64. On désigne enfin par e3 la dimension radiale des trous oblongs 84 des rondelles de guidage 43, 44.

Le montage avec jeu des rouleaux 72 dans les masses 64 et dans les rondelles de guidage 43, 44 implique que e1 est supérieur à D1, que e2 est supérieur à D2 et que e3 est supérieur à D3.

Par ailleurs, D1 est supérieur à e2 et D2 peut éventuellement être supérieur à e3. La longueur axiale de la zone centrale 72a de chaque rouleau est légèrement inférieure à l'épaisseur axiale de la partie centrale 64a de la masse correspondante 64.

Le fait que D1 soit supérieur à e2 implique que, quand les rouleaux 72 sont montés dans les masses 64, ils sont logés de façon imperdable dans les trous oblongs 71a, 71b correspondants. En effet, les épaulements radiaux 85a formés entre la zone centrale 72a et les zones intermédiaires 72b des rouleaux 72 (figure 12) sont aptes à venir en butée contre les épaulements radiaux (non référencés pour des raisons de lisibilité des figures) formés entre les trous oblongs 71a de la partie centrale 64a et les trous oblongs 71b des parties latérales 64b des masses 64.

De même, les épaulements radiaux 85b formés entre les zones intermédiaires 72b et les zones d'extrémités 72c des rouleaux 72 (figure 12) sont destinées à venir en appui, en fonctionnement, respectivement contre la face avant de la rondelle de guidage arrière 43 et contre la face arrière de la rondelle de guidage avant 44, ce qui assure le bon positionnement axial des masses 64 entre les rondelles de guidage 43, 44.

Les dimensions des différents épaulements sont relativement réduites, de manière à limiter les frottements.

On rappelle qu'en fonctionnement, les masses 64 et les rouleaux 72 sont poussés radialement vers l'extérieur par les forces centrifuges. Ainsi, en fonctionnement, les rouleaux 72 sont en appui sur les bords périphériques internes 82a des trous oblongs 71a des parties centrales 64a des masses 64et/ou sur les bords périphériques internes 82b des trous oblongs 71b des parties latérales 64b des masses 64. En outre, en fonctionnement, les rouleaux 72 sont en appui sur les bords périphériques externes 86 (figures 10 et 11) des trous oblongs 84 des rondelles de guidage 43, 44.

Le montage des masses 64 est réalisé de la manière suivante. Tout d'abord, les zones centrales 72a des rouleaux 72 sont engagées avec jeu dans les trous oblongs 71a des parties centrales 64a des masses 64. Les parties latérales 64b des masses 64 sont ensuite plaquées de part et d'autre de la partie centrale 64a, les zones intermédiaires 72b des rouleaux 72 venant se loger avec jeu dans les trous oblongs 71b desdites parties latérales 64b. Les différentes parties 64a, 64b des masses 64 sont ensuite fixées les unes aux autres par les rivets 69. Les rouleaux 72 sont alors montés de façon imperdable sur les masses correspondantes 64, ce qui permet de manipuler facilement l'ensemble avant montage des masses 64 entre les rondelles de guidage 43, 44.

Le fonctionnement des moyens d'amortissement pendulaires 63 décrits en référence aux figures 7 à 14 est similaire au fonctionnement des moyens d'amortissement pendulaires 63 décrits en référence aux figures 1 à 6.

Dans une variante non représentée, les masses 64 montées entre les deux rondelles de guidage 43, 44 peuvent être réalisées en une seule partie, les rouleaux 72 pouvant alors présenter alors une structure moins complexe, par exemple une forme cylindrique avec des collerettes venant s'intercaler entre les masses 64 et les rondelles de guidage 43, 44.

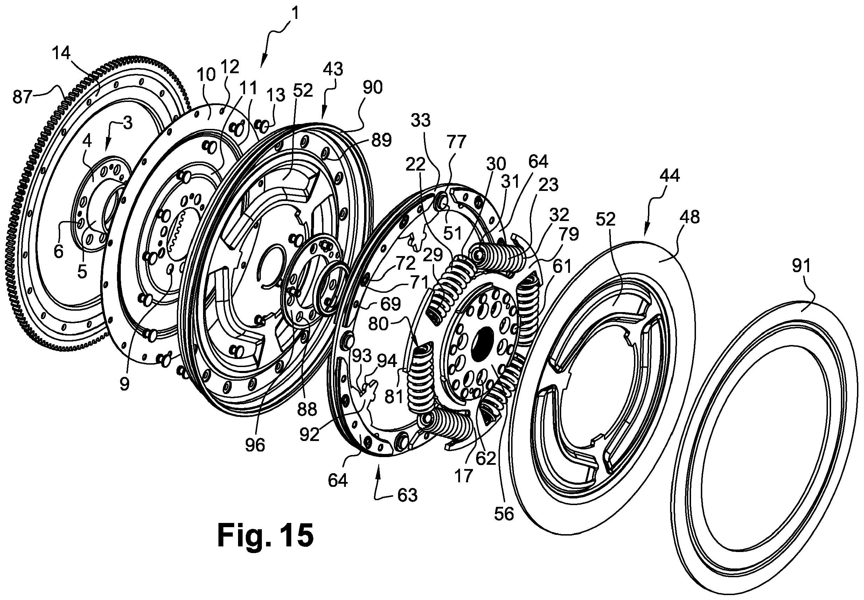

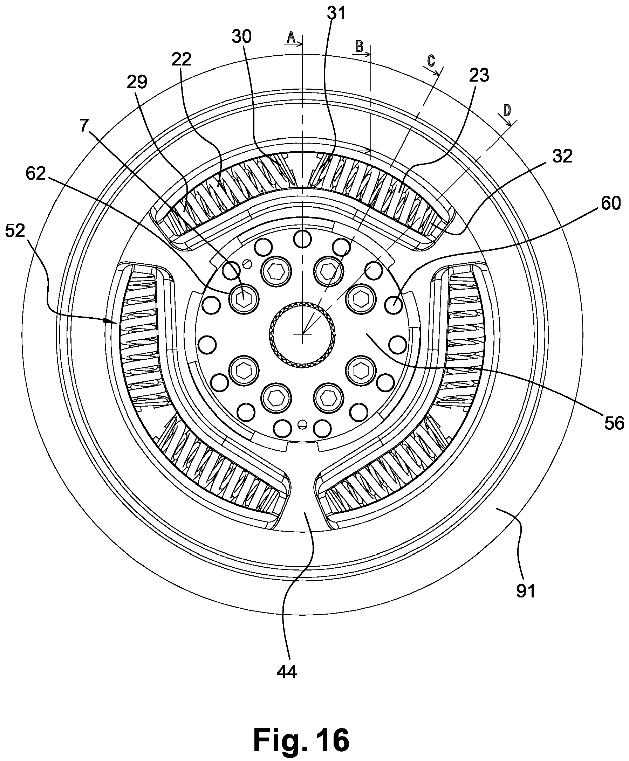

Les figures 15 à 20 représentent une deuxième forme de réalisation, qui diffère de la première forme des réalisations des figures 1 à 6, principalement en ce que les moyens d'amortissement pendulaires 63 sont montés sur l'organe de phasage 33. D'autre part, les rondelles de guidage 43, 44 appartiennent à l'élément d'entrée de couple, le voile annulaire 17 appartenant à l'élément de sortie de couple.

Dans cette forme de réalisation, la masse d'inertie 14 du volant moteur s'étend radialement et peut comporter à sa périphérie radialement externe une couronne dentée 87, destinée à engrener avec une courroie ou un pignon de démarreur. Comme précédemment, cette masse d'inertie 14 est reliée au moyeu primaire 3 par l'intermédiaire d'une tôle annulaire flexible 10.

La périphérie radialement interne de la tôle annulaire flexible 10 est pincée entre le moyeu 3 et une bague 96 dans laquelle sont ménagés des trous 88 servant au passage des vis 7.

La périphérie externe de la partie radiale est fixée à la masse d'inertie 14 du volant moteur, par l'intermédiaire des rivets 13 servant également à la fixation de la tôle flexible 10 sur la masse d'inertie 14. Les têtes des rivets 13 prennent appui dans des lamages 89 ménagés dans la partie radiale de la rondelle de guidage arrière 43 (figure 15).

Le bord périphérique externe de la rondelle de guidage arrière 43 est prolongé par un rebord cylindrique 90 s'étendant axialement vers l'avant. Le bord libre du rebord 90 est fixé à la périphérie radialement externe 48 de la rondelle de guidage avant 44, par exemple par soudage. La rondelle de guidage avant 44 est annulaire et s'étend radialement.

Une bague d'inertie annulaire 91 est fixée sur la face avant de la rondelle de guidage avant.

Les deux rondelles de guidage 43, 44 délimitent ainsi un volume interne dans lequel sont logés le voile annulaire 17, l'organe de phasage 33 et les organes élastiques 22, 23.

Le voile annulaire 17 a une structure similaire à celle du voile annulaire 17 des figures 7 à 11, les extrémités 29, 32 des organes élastiques 22, 23 prenant appui contre des pattes radiales 79 du voile annulaire 17. La périphérie radialement interne du voile annulaire 17 est fixée au moyeu secondaire 56, par l'intermédiaire de rivets 61.

La structure de l'organe de phasage 33 diffère de celle de l'organe de phasage 33 des autres formes de réalisation.

Cet organe de phasage 33 est formé d'une seule pièce annulaire, comportant trois pattes 92 s'étendant radialement vers l'intérieur (figure 15). Chaque patte 92 comporte deux surfaces opposées 93 formant un angle entre elles, destinées à l'appui des extrémités 30, 31 des organes élastiques 22, 23. Chaque surface 93 précitée comporte un plot 94 en saillie destiné à être logé dans les spires des extrémités correspondantes 30, 31 des organes élastiques 22, 23, de façon à les maintenir radialement en position.

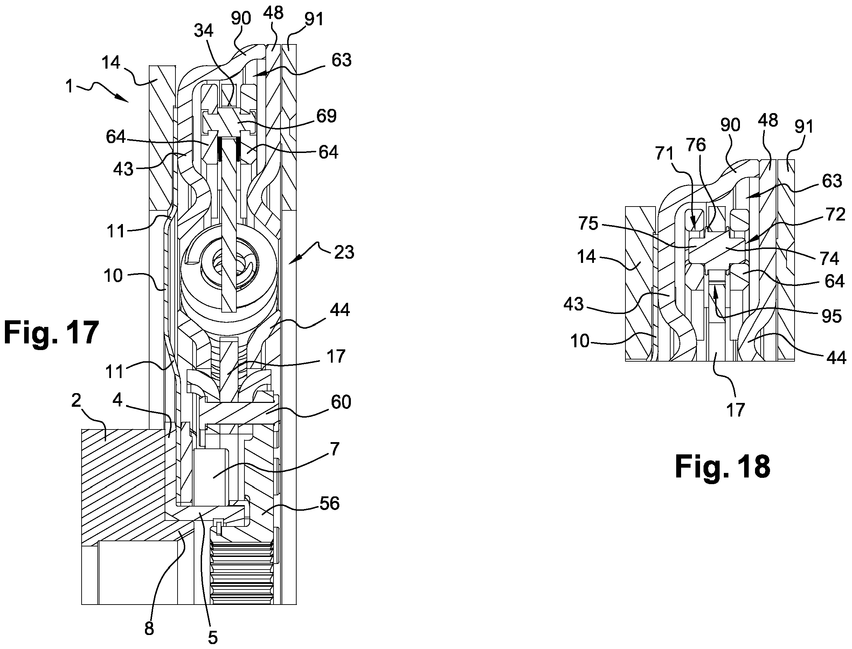

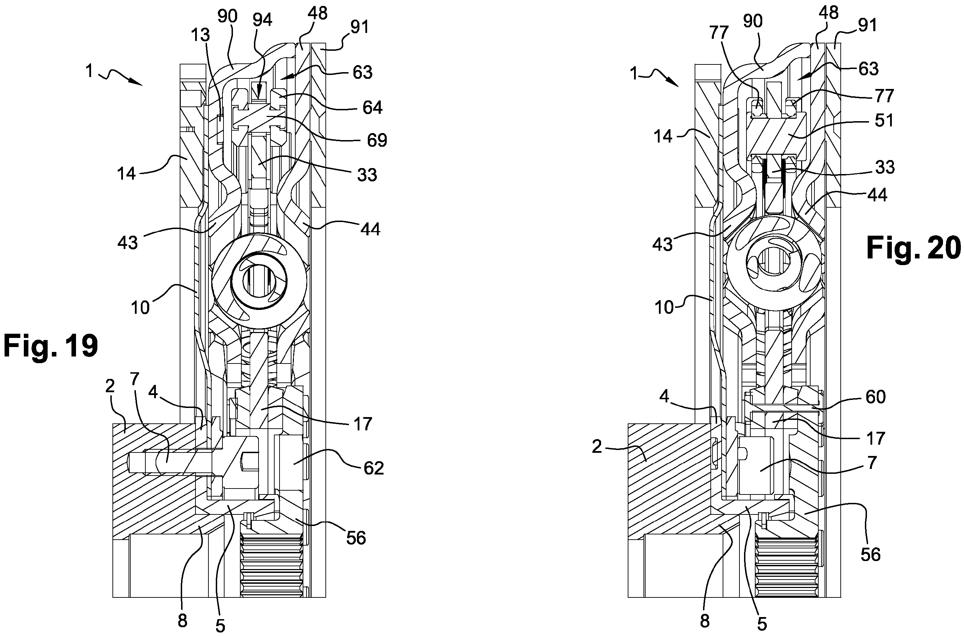

Les moyens d'amortissement pendulaires 63 comportent au moins deux paires de masses pendulaires 64, les masses 64 d'une même paire étant montées de part et d'autre de l'organe de phasage 33. Pour cela, l'organe de phasage 33 comporte des trous oblongs 94 (figures 17 et 19), 95 (figure 18) en forme d'arc de cercle avec une concavité tournée radialement vers l'intérieur, servant respectivement au passage des rivets 69 et au montage des rouleaux 72. Comme précédemment, des trous oblongs 71 en arc de cercle ayant une concavité tournée radialement vers l'extérieur sont ménagés dans les masses 64, afin de coopérer avec les extrémités des rouleaux 72. Ces derniers présentent une structure similaire à celle des rouleaux 72 des figures 1 à 6, les collerettes 76 des rouleaux 72 étant intercalées axialement entre les masses 64 et les faces radiales avant et arrière de l'organe de phasage 33. Des organes de butée 77 sont également montés de part et d'autre de l'organe de phasage 33, et sont disposés circonférentiellement entre les masses pendulaires 64.

Le fonctionnement de ces moyens d'amortissement pendulaires 63 est similaire à celui des moyens d'amortissement pendulaires 63 décrits précédemment.

Des études menées par la Demanderesse ont révélé que cette troisième forme de réalisation peut, dans certains cas de fonctionnement, présenter une plus grande efficacité en termes d'absorption et d'amortissement des vibrations et des acyclismes de rotation, par rapport aux première et deuxième formes de réalisation.

## Revendications

1. Dispositif de transmission de couple pour un véhicule automobile, comportant un élément d'entrée de couple comprenant un volant d'inertie (1) destiné à être couplé à un arbre moteur (2), et un élément de sortie de couple, destiné à être couplé à un arbre d'entrée d'une boîte de vitesses, des organes élastiques (22, 23) agissant à l'encontre de la rotation de l'un des éléments d'entrée et de sortie par rapport à l'autre et des moyens d'amortissement pendulaires (63) comportant des masses pendulaires (64) montées de façon mobile sur une partie mobile du dispositif, radialement à l'extérieur des organes élastiques (22, 23), **caractérisé en ce qu'**il comporte au moins un groupe d'organes élastiques (22, 23) monté entre les éléments d'entrée et de sortie de couple, les organes élastiques (22, 23) de ce groupe étant agencés en série par l'intermédiaire d'un organe de phasage (33), de façon à ce que les organes élastiques (22, 23) de chaque groupe se déforment en phase les uns avec les autres, les masses pendulaires (64) étant montées de façon mobile sur l'élément de sortie de couple ou sur l'organe de phasage (33), les organes élastiques (22, 23) du ou de chaque groupe prenant appui, d'une part, sur un voile annulaire (17) et, d'autre part, sur deux rondelles de guidage (43, 44) qui s'étendent radialement, de part et d'autre du voile annulaire (17) et qui sont mobiles en rotation par rapport à ce dernier, les rondelles de guidage (43, 44) appartenant à l'élément de sortie de couple, le voile annulaire (17) appartenant à l'élément d'entrée de couple, les masses pendulaires (64) étant montées en périphérie externe de l'une au moins des rondelles de guidage (43, 44), **caractérisé en ce que** le volant d'inertie (1) comporte un rebord cylindrique (16) radialement externe, recouvrant au moins partiellement l'élément de sortie de couple, les organes élastiques (22, 23) et les masses pendulaires (64).

2. Dispositif de transmission de couple selon la revendication 1, **caractérisé en ce que** les masses pendulaires (64) sont disposées axialement de part et d'autre de la rondelle de guidage (43, 44) sur laquelle elles sont montées, et sont reliées entre elles.

3. Dispositif de transmission de couple selon la revendication 1, **caractérisé en ce que** les masses pendulaires (64) sont disposées axialement entre les deux rondelles de guidage (43, 44) et montées de façon mobile sur chacune des rondelles de guidage (43, 44).

4. Dispositif de transmission de couple pour un véhicule automobile, comportant un élément d'entrée de couple comprenant un volant d'inertie (1) destiné à être couplé à un arbre moteur (2), et un élément de sortie de couple, destiné à être couplé à un arbre d'entrée d'une boîte de vitesses, des organes élastiques (22, 23) agissant à l'encontre de la rotation de l'un des éléments d'entrée et de sortie par rapport à l'autre et des moyens d'amortissement pendulaires (63) comportant des masses pendulaires (64) montées de façon mobile sur une partie mobile du dispositif, radialement à l'extérieur des organes élastiques (22, 23), **caractérisé en ce qu'**il comporte au moins un groupe d'organes élastiques (22, 23) monté entre les éléments d'entrée et de sortie de couple, les organes élastiques (22, 23) de ce groupe étant agencés en série par l'intermédiaire d'un organe de phasage (33), de façon à ce que les organes élastiques (22, 23) de chaque groupe se déforment en phase les uns avec les autres, les masses pendulaires (64) étant montées de façon mobile sur l'élément de sortie de couple ou sur l'organe de phasage (33), les organes élastiques (22, 23) du ou de chaque groupe prenant appui, d'une part, sur un voile annulaire (17) et, d'autre part, sur deux rondelles de guidage (43, 44) qui s'étendent radialement, de part et d'autre du voile annulaire (17) et qui sont mobiles en rotation par rapport à ce dernier, les rondelles de guidage (43, 44) appartenant à l'élément d'entrée de couple, ou respectivement à l'élément de sortie de couple, le voile annulaire (17) appartenant à l'élément de sortie de couple, ou respectivement à l'élément d'entrée de couple, les masses pendulaires (64) étant montées en périphérie externe de l'organe de phasage (33), **caractérisé en ce que** le volant d'inertie (1) comporte un rebord cylindrique (16) radialement externe, recouvrant au moins partiellement l'élément de sortie de couple, les organes élastiques (22, 23) et les masses pendulaires (64).

5. Dispositif de transmission de couple selon la revendication 4, **caractérisé en ce que** les masses (64) sont disposées axialement de part et d'autre de l'organe de phasage (33) sur lequel elles sont montées, et sont reliées entre elles.

6. Dispositif de transmission de couple selon l'une des revendications 1 à 5, **caractérisé en ce que** l'organe de phasage (33) comporte deux tôles (34) fixées l'une à l'autre et s'étendant radialement, de part et d'autre du voile annulaire (17), lesdites tôles étant équipées de moyens d'appui (39) des organes élastiques (22, 23).

7. Dispositif de transmission de couple selon l'une des revendications 1 à 6, **caractérisé en ce que** le volant d'inertie (1) de l'élément d'entrée de couple comporte une masse d'inertie (14) en périphérie radialement externe et un moyeu (3) en périphérie radialement interne, relié à la masse d'inertie (14) par l'intermédiaire d'au moins une tôle annulaire flexible (10).

## Patentansprüche

1. Vorrichtung zur Drehmomentübertragung für ein Kraftfahrzeug, umfassend ein Drehmomenteingabeelement, umfassend ein Schwungrad (1), welches dafür vorgesehen ist, mit einer Motorwelle (2) verbunden zu sein, und ein Drehmomentabtriebselement, welches dafür vorgesehen ist, mit einer Eingangswelle eines Getriebes verbunden zu sein, elastische Organe (22, 23), welche gegen die Drehung von dem einen von dem Eingabe- und Abtriebselement in Bezug auf das andere einwirken, und Pendeldämpfungsmittel (63), welche Pendelmassen (64) umfassen, welche beweglich an einem beweglichen Teil der Vorrichtung radial außerhalb der elastischen Organe (22, 23) montiert sind,
**dadurch gekennzeichnet, dass** sie mindestens eine Gruppe von elastischen Organen (22, 23) umfasst, welche zwischen dem Drehmomenteingabe- und -abtriebselement montiert sind, wobei die elastischen Organe (22, 23) dieser Gruppe mit Hilfe eines Phasengliedes (33) in Reihe angeordnet sind, so dass sich die elastischen Organe (22, 23) von jeder Gruppe miteinander in Phase verformen,
wobei die Pendelmassen (64) an dem Drehmomentabtriebselement oder an dem Phasenglied (33) beweglich montiert sind,
wobei sich die elastischen Organe (22, 23) der oder jeder Gruppe einerseits an einer ringförmigen Abdeckung (17) und andererseits an zwei Führungsscheiben (43, 44) abstützen, welche sich radial beiderseits der ringförmigen Abdeckung (17) erstrecken und welche drehbeweglich in Bezug auf die Letztere sind,
wobei die Führungsscheiben (43, 44) dem Drehmomentabtriebselement angehören, wobei die ringförmige Abdeckung (17) dem Drehmomenteingabeelement angehört, wobei die Pendelmassen (64) am äußeren Umfang von mindestens einer der Führungsscheiben (43, 44) montiert sind,
**dadurch gekennzeichnet, dass** das Schwungrad (1) einen radial äußeren, zylindrischen Rand (16) umfasst, welcher zumindest teilweise das Drehmomentabtriebselement, die elastischen Organe (22, 23) und die Pendelmassen (64) abdeckt.

2. Vorrichtung zur Drehmomentübertragung nach Anspruch 1, **dadurch gekennzeichnet, dass** die Pendelmassen (64) axial beiderseits der Führungsscheibe (43, 44), an welcher sie montiert sind, angeordnet sind und untereinander verbunden sind.

3. Vorrichtung zur Drehmomentübertragung nach Anspruch 1, **dadurch gekennzeichnet, dass** die Pendelmassen (64) axial zwischen den beiden Führungsscheiben (43, 44) angeordnet und an jeder der Führungsscheiben (43, 44) jeweils beweglich montiert sind

4. Vorrichtung zur Drehmomentübertragung für ein Kraftfahrzeug, umfassend ein Drehmomenteingabeelement, umfassend ein Schwungrad (1), welches dafür vorgesehen ist, mit einer Motorwelle (2) verbunden zu sein, und ein Drehmomentabtriebselement, welches dafür vorgesehen ist, mit einer Getriebeeingangswelle verbunden zu sein, elastische Organe (22, 23), welche gegen die Drehung von dem einen von dem Eingabe- und Abtriebselement in Bezug auf das andere einwirken, und Pendeldämpfungsmittel (63), welche Pendelmassen (64) umfassen, welche beweglich an einem beweglichen Teil der Vorrichtung, radial außerhalb der elastischen Organe (22, 23) montiert sind,
**dadurch gekennzeichnet, dass** sie mindestens eine Gruppe von elastischen Organen (22, 23) umfasst, welche zwischen dem Drehmomenteingabe- und -abtriebselement montiert sind, wobei die elastischen Organe (22, 23) dieser Gruppe mit Hilfe eines Phasengliedes (33) in Reihe angeordnet sind, so dass sich die elastischen Organe (22, 23) von jeder Gruppe miteinander in Phase verformen, wobei die Pendelmassen (64) an dem Drehmomentabtriebselement oder an dem Phasenglied (33) beweglich montiert sind, wobei sich die elastischen Organe (22, 23) der oder jeder Gruppe einerseits an einer ringförmigen Abdeckung (17) und andererseits an zwei Führungsscheiben (43, 44) abstützen, welche sich radial beiderseits der ringförmigen Abdeckung (17) erstrecken und welche drehbeweglich in Bezug auf die Letztere sind,
wobei die Führungsscheiben (43, 44) dem Drehmomenteingabeelement oder beziehungsweise dem Drehmomentabtriebselement angehören, wobei die ringförmige Abdeckung (17) dem Drehmomentabtriebselement oder beziehungsweise dem Drehmomenteingabeelement angehört, wobei die Pendelmassen (64) am äußeren Umfang des Phasengliedes (33) montiert sind,
**dadurch gekennzeichnet, dass** das Schwungrad (1) einen radial äußeren, zylindrischen Rand (16) umfasst, welcher zumindest teilweise das Drehmomentabtriebselement, die elastischen Organe (22, 23) und die Pendelmassen (64) abdeckt.

5. Vorrichtung zur Drehmomentübertragung nach Anspruch 4, **dadurch gekennzeichnet, dass** die Massen (64) axial beiderseits des Phasengliedes (33), an welchem sie montiert sind, angeordnet sind und untereinander verbunden sind.

6. Vorrichtung zur Drehmomentübertragung nach einem der Ansprüche 1 bis 5,
**dadurch gekennzeichnet, dass** das Phasenglied (33) zwei Bleche (34) umfasst, welche aneinander befestigt sind und sich radial beiderseits der ringförmigen Abdeckung (17) erstrecken, wobei die Bleche mit Anschlagmitteln (39) der elastischen Mittel (22, 23) ausgerüstet sind.

7. Vorrichtung zur Drehmomentübertragung nach einem der Ansprüche 1 bis 6,
**dadurch gekennzeichnet, dass** das Schwungrad (1) des Drehmomenteingabeelements eine Schwungmasse (14) radial am äußeren Umfang und eine Nabe (3) radial am inneren Umfang umfasst, welche mit Hilfe von mindestens einem ringförmigen, flexiblen Blech (10) mit der Schwungmasse (14) verbunden ist.

## Claims

1. Torque transmitting device for a motor vehicle, comprising a torque input element having a flywheel (1) designed to be coupled to a drive shaft (2) and a torque output element designed to be coupled to an input shaft of a gearbox, elastic members (22, 23) acting counter to the rotation of one of the input and output elements relative to the other and pendular damping means (63) comprising pendular masses (64) movably mounted on a mobile part of the device, radially outside the elastic members (22, 23), **characterized in that** it comprises at least one group of elastic members (22, 23) mounted between the torque input and output elements, the elastic members (22, 23) of this group being arranged in series via a phasing member (33), such that the elastic members (22, 23) of each group are deformed in phase with one another, the pendular masses (64) being movably mounted on the torque output element or on the phasing member (33), the elastic members (22, 23) of the group or of each group bearing, on the one hand, against an annular web (17) and, on the other hand, against two guide washers (43, 44) which extend radially on either side of the annular web (17) and which are mobile in rotation relative thereto, the guide washers (43, 44) belonging to the torque output element, the annular web (17) belonging to the torque input element, and the pendular masses (64) being mounted on the external periphery of at least one of the guide washers (43, 44), **characterized in that** the flywheel (1) comprises a radially external cylindrical edge (16) at least partially covering the torque output element, the elastic members (22, 23) and the pendular masses (64).

2. Torque transmission device according to Claim 1, **characterized in that** the pendular masses (64) are axially arranged on either side of the guide washer (43, 44) on which they are mounted, and are connected together.

3. Torque transmission device according to Claim 1, **characterized in that** the pendular masses (64) are axially arranged between the two guide washers (43, 44) and movably mounted on each of the guide washers (43, 44) .

4. Torque transmission device for a motor vehicle, comprising a torque input element having a flywheel (1) designed to be coupled to a drive shaft (2) and a torque output element designed to be coupled to an input shaft of a gearbox, elastic members (22, 23) acting counter to the rotation of one of the input and output elements relative to the other and pendular damping means (63) comprising pendular masses (64) which are movably mounted on a mobile part of the device, radially outside the elastic members (22, 23), **characterized in that** it comprises at least one group of elastic members (22, 23) mounted between the torque input and output elements, the elastic members (22, 23) of this group being arranged in series via a phasing member (33), such that the elastic members (22, 23) of each group are deformed in phase with one another, the pendular masses (64) being movably mounted on the torque output element or on the phasing member (33), the elastic members (22, 23) of the group or of each group bearing, on the one hand, against an annular web (17) and, on the other hand, against two guide washers (43, 44) which extend radially on either side of the annular web (17) and which are mobile in rotation relative thereto, the guide washers (43, 44) belonging to the torque input element or respectively to the torque output element, the annular web (17) belonging to the torque output element or respectively to the torque input element, and the pendular masses (64) being mounted on the external periphery of the phasing member (33), **characterized in that** the flywheel (1) comprises a radially external cylindrical edge (16) at least partially covering the torque output element, the elastic members (22, 23) and the pendular masses (64).

5. Torque transmission device according to Claim 4, **characterized in that** the masses (64) are axially arranged on either side of the phasing member (33) on which they are mounted, and are connected together.

6. Torque transmission device according to one of Claims 1 to 5, **characterized in that** the phasing member (33) comprises two metal plates (34) which are fixed to one another and extend radially on either side of the annular web (17), said metal plates being provided with bearing means (39) of the elastic members (22, 23).

7. Torque transmission device according to one of Claims 1 to 6, **characterized in that** the flywheel (1) of the torque input element comprises an inertial mass (14) on the radially external periphery and a hub (3) on the radially internal periphery, which is connected to the inertial mass (14) via at least one flexible annular metal plate (10).
